# EUROPÄISCHE PATENTSCHRIFT

(11) **EP 3 219 510 B1**
(45) Veröffentlichungstag und Bekanntmachung des Hinweises auf die Patenterteilung: **12.06.2019**
(21) Anmeldenummer: 16206036.2
(22) Anmeldetag: 22.12.2016
(51) Int. Cl.: B60C 1/00, C08L 7/00, C08L 21/00, C08K 3/04

(54) **MIT SCHWEFEL VERNETZBARE GUMMIERUNGSMISCHUNG**
RUBBER MIXTURE THAT CAN BE CROSS-LINKED BY SULPHUR
MÉLANGE DE CAOUTCHOUTAGE RÉTICULABLE À L'AIDE DE SOUFRE

(30) Priorität: 15.03.2016 DE 102016204217
(43) Veröffentlichungstag der Anmeldung: 20.09.2017
(73) Patentinhaber: Continental Reifen Deutschland GmbH, 30165 Hannover (DE)
(72) Erfinder: Schmaunz-Hirsch, Cornelia, 31515 Wunstorf (DE); Kramer, Thomas, 32049 Herford (DE); Matzen, Jan Philip, 30449 Hannover (DE)
(74) Vertreter: Finger, Karsten

(56) Entgegenhaltungen:
- EP-A1- 2 236 315
- EP-A1- 2 236 316
- EP-A1- 2 607 098
- EP-A1- 2 743 301
- US-A1- 2004 092 647
- US-A1- 2005 222 318
- US-A1- 2005 256 249
- US-A1- 2008 110 552
- US-A1- 2010 108 239
- US-A1- 2013 102 714
- US-A1- 2013 133 803
- US-A1- 2013 153 099
- US-A1- 2014 171 564

## Beschreibung

Die Erfindung betrifft eine mit Schwefel vernetzbare Gummierungsmischung für Festigkeitsträger in Elastomer-Erzeugnissen, insbesondere in Fahrzeugreifen. Ferner betrifft die Erfindung Fahrzeugreifen, die die mit Schwefel vernetzte Gummierungsmischung aufweisen.

Die US 7,847,009 B2 offenbart einen Industrieruß mit einem DeltaD50/D-Modalwert von mehr als 0,9 und einem Heterogenitätswert (HI) von über 2,3. Die US 7,847,009 B2 betrifft auch eine Polymerzusammensetzung und einen Reifen, aufweisend den Industrieruß CD2056. Jedoch eignet sich die offenbarte Kautschukmischung nicht als Gummierungsmischung zur Einbettung von Festigkeitsträgern.

Mit Schwefel vernetzbare Gummierungsmischungen sind aus der DE 696 02 212 T2 bekannt. Sie werden dort beispielsweise als Gummierungsmischungen für den Gürtel eines Fahrzeugreifens eingesetzt. Bekannt ist der Einsatz der ASTM Industrieruße N326 sowie N339 in Kautschukmischungen zur Verwendung im Gürtel- und Gürtelkantenbereich. Die in der DE 696 02 212 T2 verwendeten Industrieruße sind solche des Typs N326. Dies ist neben dem Typ N339 einer der typischen Industrieruße für Gummierungsmischungen. Die US 2010108239 A1 offenbart eine Gummierungsmischung enthaltend den ASTM Ruß N326 oder den ASTM Ruß N 339.
Die US 2005222318 A1 und die US 2013133803 A1 offenbaren Gummierungsmischungen enthaltend den ASTM Ruß N 347.

Die US 2004092647 A1 offenbart eine Gummierungsmischung enthaltend den Ruß N347 oder einen Ruß A oder einen Ruß B. Ruß A und Ruß B weisen eine BET-Oberfläche, die mit der NSA-Oberfläche gleichzusetzen ist, von 53 m²/g bzw. 50 m²/g auf.
Die EP 2607098 A1 offenbart eine Kautschukmischung für ein inneres Reifenbauteil, aber keine Gummierungsmischung enthaltend ein Haftsystem.
Die EP 2236315 A1 und die EP 2236316 A1 offenbaren Kautschukmischungen enthaltend Klebharze und den Ruß N 339.
Auch die US 20140171564 A1, US 20050256249 A1 und die US 20080110552 A1 offenbaren Kautschukmischungen mit verschiedenen Rußen.
Die US 20130102714 A1 offenbart Kautschukmischungen enthaltend den Ruß N339 ohne Haftsystem.
Die US 2013153099 A1 und die EP 2743301 A1 offenbaren Laufstreifenmischungen.

Der vorliegenden Erfindung liegt die Aufgabe zugrunde, eine Gummierungsmischung für Festigkeitsträger in Fahrzeugreifen bereit zu stellen, die hinsichtlich Steifigkeit und Wärmeaufbau verbessert ist. Eine Verbesserung der Lebensdauer von Fahrzeugreifen soll ebenfalls erzielt werden.

Gelöst wird die Aufgabe erfindungsgemäß dadurch, dass die mit Schwefel vernetzbare Gummierungsmischung einen Industrieruß LS mit einer spezifischen Oberfläche NSA gemäß ASTM D6556-04 zwischen 85 bis 95 m²/g und eine Struktur, abgeleitet aus der Ölabsorptionszahl OAN gemäß ASTM D2414 zwischen 125 und 145 ml/100 g und eine Struktur nach der Komprimierung der Industrierußprobe LS, abgeleitet aus der Ölabsorptionszahl COAN gemäß ASTM D3493 zwischen 105 und 117 ml/100 g aufweist.

Dieser in einer erfindungsgemäßen mit Schwefel vernetzbaren Gummierungsmischung enthaltene Industrieruß LS (low surface) weist eine niedrige spezifische Oberfläche NSA gemäß ASTM D6556-04 zwischen 85 bis 95 m²/g, besonders bevorzugt zwischen 87,5 und 92,5 m²/g und im Vergleich zur spezifischen Oberfläche hoher Struktur der Industrierußprobe LS, abgeleitet aus der Ölabsorptionszahl OAN gemäß ASTM D2414, zwischen 125 und 145 ml/100 g, besonders bevorzugt zwischen 130 ml/100 g und 140 ml/100 g, auf.

Weiterhin weist dieser in einer erfindungsgemäßen mit Schwefel vernetzbaren Gummierungsmischung enthaltene Industrieruß LS (low surface) eine niedrige spezifische Oberfläche NSA gemäß ASTM D6556-04 zwischen 85 bis 95 m²/g, besonders bevorzugt zwischen 87,5 und 92,5 m²/g und im Vergleich zur spezifischen Oberfläche hoher Struktur nach der Komprimierung der Industrierußprobe LS, abgeleitet aus der Ölabsorptionszahl COAN gemäß ASTM D3493 zwischen 105 und 117 ml/100 g, besonders bevorzugt zwischen 107,5 ml/100 g und 114,5 ml/100 g auf.

Dieser in einer erfindungsgemäßen mit Schwefel vernetzbaren Gummierungsmischung enthaltene Industrieruß LS zeichnet sich vorzugsweise durch eine Jodadsorptionszahl gemäß ASTM D1510 von ≥ 92 ± 0,36 mg/g, eine Ölabsorptionszahl OAN gemäß ASTM D2414 von ≥ 135 ± 0,35 ml/100 g, eine Ölabsorptionszahl der komprimierten Industrierußprobe LS C-OAN gemäß ASTM D3493 von ≥ 112 ± 0,53 ml/100 g, eine spezifische Oberfläche NSA gemäß ASTM D6556 von ≤ 89 ± 0,69 m²/g und eine spezifische, für Kautschuk zugängliche Oberfläche STSA gemäß ASTM D6556 von ≥ 87 ± 0,69 m²/g aus. Unter diese Industrieruße fällt beispielsweise der Industrieruß mit der Bezeichnung CD2056 von der Firma Birla Carbon.

### Ab hier weiter mit ursprünglicher Seite 3 oben

Industrieruß (englisch Carbon Black) ist gezielt hergestellter elementarer Kohlenstoff in der Form von kolloidalen Partikeln, hergestellt durch unvollständige Verbrennungsprozesse oder thermische Zersetzung von gasförmigen oder flüssigen Kohlenwasserstoffen unter kontrollierten Bedingungen. Es fällt als schwarzes, feines Pulver an. Dem gegenüber steht der Ruß, beispielsweise Kamin- oder Dieselruß, der als undefiniertes Nebenprodukt bei der Verbrennung von Kohle bzw. Kohlenwasserstoffen entsteht. Industrieruß besteht zu mehr als 96 % aus amorphem Kohlenstoff und geringen Mengen an Sauerstoff, Wasserstoff, Stickstoff und Schwefel. Die meisten dieser Elemente sind an der Oberfläche konzentriert. Der Sauerstoffgehalt von nachträglich oxidiertem Industrieruß kann bis zu 15 % betragen.

ASTM International (vormals American Society for Testing and Materials) ist eine internationale Standardisierungsorganisation mit Sitz in West Conshohocken, Pennsylvania, USA, welche sich auch mit der Standardisierung von Industrierußen beispielsweise für die Kautschukindustrie befasst. Über die standardisierten Industrieruße hinaus stehen vielfältige weitere Industrieruße zur Verfügung.

Die ASTM D6556-04 ist eine Standard Testmethode zur Bestimmung der gesamten äußeren Oberfläche von Industrieruß durch Stickstoff-Adsorption. Bestimmt wird zum einen die Stickstoff Oberfläche (Nitrogen Surface Area (NSA)) und zum anderen die statistische Dicke der Oberfläche (Statistical Thickness Surface Area (STSA)). Die ASTM D2414-06a ist eine Standard Testmethode zur Bestimmung der Industrieruß Ölabsorptionszahl (Carbon Black-Oil Absorption Number (OAN)). Die ASTM D3493-06e1 ist eine Standard Testmethode zur Bestimmung der Industrieruß Ölabsorptionszahl der komprimierten Probe (Carbon Black-Oil Absorption Number of Compressed Sample (COAN)).

Die nachfolgende Tabelle 1 zeigt eine mögliche, erfindungsgemäße mit Schwefel vernetzbare Gummierungsmischung für Elastomere-Erzeugnisse welche nicht auf die Darstellung in der Tabelle 1 beschränkt ist. Bei den in der Tabelle 1 genannten generischen Begriffen für enthaltene Substanzen und die Nennung konkreter Substanzen handelt es sich um keine abschließende Aufzählung für Bestandteile einer erfindungsgemäßen Gummierungsmischung. Die erfindungsgemäße Gummierungsmischung weist mindestens einen Industrieruß LS auf.

Die in dieser Schrift verwendete Angabe phr (parts per hundred parts of rubber by weight) ist dabei die in der Kautschukindustrie übliche Mengenangabe für Gummierungsmischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Bei sämtlichen in den Tabellen enthaltenen Mischungsbeispielen sind die angegebenen Mengenangaben Gewichtsteile, die auf 100 Gewichtsteile Gesamtkautschuk bezogen sind (phr).

Die Herstellung der erfindungsgemäßen mit Schwefel vernetzbaren Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

**Tabelle 1**

| **Zuordnung** | **Bestandteile** | **Einheit** | **Gewichtsteile** |
|---|---|---|---|
| **A** | **Kautschuk** | **phr** | **100** |
| | Naturkautschuk | phr | 10 - 100 |
| | Synthesekautschuk | phr | 00 - 100 |
| **B** | **Füllstoff** | **phr** | **20 - 90** |
| | Industrieruß | phr | 20 - 90 |
| | Kieselsäure | phr | 00 - 90 |
| | weitere Füllstoffe | phr | 00 - 10 |
| **C** | **Aktivatoren** | **phr** | **1,0 - 15** |
| | Zinkoxid | phr | 1,0 - 15 |
| | Fettsäure | phr | 1,0 - 15 |
| **D** | **Agenzien** | **phr** | **00 - 15** |
| | Kupplungsagenzien | phr | 00 - 15 |
| **E** | **Prozesshilfsmittel / Zusatzstoffe** | **phr** | **00 - 70** |
| | Alterungsschutzmittel | phr | 2,0 - 8,0 |
| | Weichmacher | phr | 00 - 70 |
| **F** | **Vulkanisationsregulatoren** | **phr** | **0,1 - 10** |
| | Vulkanisationsbeschleuniger | phr | 0,1 - 2,0 |
| **G** | **Schwefel und/oder Schwefelspender** | **phr** | **0,4 - 8,0** |
| | Schwefel | phr | 0,4 - 8,0 |
| **H** | **Haftsystem** | **phr** | **0,1 - 10** |
| | organisches Cobaltsalz | phr | 0,1 - 03 |
| | Harz aus Resorcin und Formaldehydspender | phr | 2,0 - 6,0 |
| | Verstärkerharz | phr | 00 - 6,0 |

### A Kautschuk

Die erfindungsgemäße mit Schwefel vernetzbare Gummierungsmischung enthält wenigstens einen Dienkautschuk. Hierbei kann es sich um alle dem Fachmann bekannten Dienkautschuke handeln. Bevorzugt ist/sind der oder die Dienkautschuke ausgewählt aus der Gruppe bestehend aus natürlichem Polyisopren (NR) und synthetischem Polyisopren (IR) und Butadien-Kautschuk (BR) und Styrol-Butadien-Kautschuk (SBR). Dabei kann es sich bei NR und IR sowohl um cis-1,4-Polyisopren als auch um 3,4-Polyisopren handeln. Bevorzugt ist allerdings die Verwendung von cis-1,4-Polyisoprenen mit einem cis 1,4-Massenanteil > 90 %. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Massenanteil im Naturkautschuk ist größer 99 %.

Die mit Schwefel vernetzbare Gummierungsmischung enthält bevorzugt 10 bis 100 phr, wiederum bevorzugt 70 bis 100 phr, besonders bevorzugt 30 bis 100 phr, ganz besonders bevorzugt 50 bis 90 phr Naturkautschuk (NR), wobei es sich um auf biochemischem Wege in Pflanzen synthetisiertes Polyisopren mit einem cis-1,4-Massenanteil von mehr als 99 % handelt. Für besonders gute Weiterreißeigenschaften enthält die mit Schwefel vernetzbare Gummierungsmischung vorzugsweise 100 phr Naturkautschuk.

Als weiteren Kautschuk kann die mit Schwefel vernetzbare Gummierungsmischung wenigstens einen Synthesekautschuk in Mengen von 10 bis 90 phr, bevorzugt 30 bis 70 phr enthalten.

Bei dem mindestens einen Synthesekautschuk in der mit Schwefel vernetzbaren Gummierungsmischung handelt es sich bevorzugt um IR, BR oder SBR (siehe oben), besonders bevorzugt um Polybutadien (Butadienkautschuk, BR).

Enthält die mit Schwefel vernetzbare Gummierungsmischung als Dienkautschuk Polybutadien (BR), kann es sich dabei sowohl um cis-1,4- als auch um Vinyl-Polybutadien (ca 10-90 % Vinyl-Massenanteil) handeln. Bevorzugt ist die Verwendung von cis-1,4-Polybutadien mit einem cis-1,4-Massenanteil größer 90 %, welches beispielsweise durch Lösungspolymerisation in Anwesenheit von Katalysatoren vom Typ der seltenen Erden hergestellt werden kann.

Für besonders gute Haftungseigenschaften und eine gutes Verarbeitungsverhalten ist das Polybutadien eines mit einem cis-Massenanteil von mehr als 95 % oder ein funktionalisiertes Li-Polybutadien, beispielsweise BR1250 H von der Firma Nippon Zeon oder solche funktionalisierten Polybutadiene, wie sie in der EP 2 289 990 A1 beschrieben sind.

Als weitere Dienkautschuke sind Styrol-Butadien-Copolymere einsetzbar. Bei den Styrol-Butadien-Copolymeren kann es sich um lösungspolymerisierte Styrol-Butadien-Copolymere (S-SBR) mit einem Styrol-Massenanteil, bezogen auf das Polymer, von ca. 10 bis 45 % und einem Vinyl-Massenanteil (Gehalt an 1,2-gebundenem Butadien, bezogen auf das gesamte Polymer) von 10 bis 70 % handeln, welche zum Beispiel unter Verwendung von Lithiumalkylen in organischem Lösungsmittel hergestellt werden können. Die S-SBR können auch gekoppelt und endgruppenmodifiziert sein. Es können aber auch emulsionspolymerisierte Styrol-Butadien-Copolymere (E-SBR) sowie Mischungen aus E SBR und S-SBR eingesetzt werden. Der Styrol-Massenanteil des E-SBR beträgt ca. 15 bis 50 % und es können die aus dem Stand der Technik bekannten Typen, die durch Copolymerisation von Styrol und 1,3-Butadien in wässriger Emulsion erhalten wurden, verwendet werden.

Die in der mit Schwefel vernetzbare Gummierungsmischung eingesetzten Dienkautschuke, insbesondere die Styrol-Butadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei beispielsweise um Funktionalisierungen mit Hydroxylgruppen und/oder Epoxygruppen und/oder Siloxangruppen und/oder Aminogruppen und/oder Phthalocyaningruppen und/oder Carboxygruppen und/oder Silan-Sulfid-Gruppen handeln.

Gemäß einer Alternative enthält die mit Schwefel vernetzbare Gummierungsmischung 100 phr wenigstens eines natürlichen Polyisoprens (NR) und/oder synthetischen Polyisoprens (IR), womit auch ein Gemisch aus NR und IR umfasst ist.

Gemäß einer weiteren Alternative enthält die mit Schwefel vernetzbare Gummierungsmischung 25 bis 85 phr wenigstens eines natürlichen und/oder synthetischen Polyisoprens und 15 bis 50 phr wenigstens eines Butadien-Kautschuks und/oder 15 bis 50 phr wenigstens eines Styrol-Butadien-Kautschuks. Insbesondere mit diesen Kautschuken zeigen sich, insbesondere in Festigkeitsträgerlagen von Fahrzeugreifen, sehr gute physikalische Eigenschaften der mit Schwefel vernetzbare Gummierungsmischung hinsichtlich der Verarbeitbarkeit, der Haltbarkeit und der Reißeigenschaften, während ein ausreichendes Haftungsniveau erzielt wird.

### B Füllstoffe

### Industrieruß

Die mit Schwefel vernetzbare Gummierungsmischung enthält als Füllstoff zumindest einen Industrieruß LS mit den zu Beginn der Schrift definierten Eigenschaften. Die Gesamtmenge des Industrierußes LS beträgt 20 bis 90 phr, bevorzugt werden 30 bis 90 phr, besonders bevorzugt 40 bis 70 phr eingesetzt, wobei auch ein Gemisch aus zwei oder mehrerer derartiger Industrieruße denkbar ist.

Es hat sich überraschenderweise herausgestellt, dass durch Verwendung eines derartigen Industrierußes LS die Hysterese von mit Schwefel vernetzbaren Gummierungsmischungen erniedrigt werden kann, was zu einem verringerten Wärmeaufbau führt. Reifen mit einer erfindungsgemäßen Gummierungsmischung beispielsweise als Gürtelgummierungsmischung erfahren dadurch eine deutliche Erhöhung der Lebensdauer.

Weiterhin treten bei der Verwendung eines derartigen Industrierußes LS geringere Füllstoff-Füllstoff-Wechselwirkungen auf, was zu einer hohen Verstärkung bei niedriger Hysterese führt.

Der erfindungsgemäß verwendete Industrieruß LS weist insbesondere gegenüber den Industrierußen N339 und N326 eine hohe Ölabsorptionszahl (OAN) gemäß ASTM D2414, sowie eine hohe Ölabsorptionszahl der komprimierten Industrierußprobe (COAN) gemäß ASTM D3493 auf, dies führt überraschend zu einer hohen Steifigkeit und geringer Hysterese der resultierenden mit Schwefel vernetzbaren Gummierungsmischung. Es ist davon auszugehen, dass der Industrieruß LS beim Einsatz in mit Schwefel vernetzbaren Gummierungsmischungen eine große Oberfläche zum Interagieren insbesondere mit den Kautschukbestandteilen der mit Schwefel vernetzbaren Gummierungsmischung aufweist. Hierauf weißt der COAN-Wert für den Industrieruß LS hin. Weiterhin bleibt die Struktur des Industrierußes LS nach dem Komprimieren der Industrierußprobe LS bzw. nach dem Einbringen des Industrierußes LS in die mit Schwefel vernetzbare Gummierungsmischung erhalten.

Der Industrieruß LS weist einen gegenüber den Industrierußen N326 und N339 hohen COAN-Wert auf. Dies lässt darauf schließen, dass die Struktur auch nach der Kompression, also nach nachgestelltem Mischen noch wirksam ist. Somit weist der erfindungsgemäß ausgewählte Industrieruß eine hohe Oberflächenaktivität in der mit Schwefel vernetzbaren Gummierungsmischung auf. Dieser Effekt ist überraschend, da die Werte von OAN zu COAN regelmäßig deutlich abnehmen, was auf die Komprimierung des Industrierußes zurückzuführen ist.

Zusätzlich zum in der erfindungsgemäßen mit Schwefel vernetzbaren Gummierungsmischung mindestens enthaltenen Industrieruß LS, kann auch mindestens ein weiterer Industrieruß mit einer anderen Spezifikation respektive anderen Eigenschaften in der mit Schwefel vernetzbaren Gummierungsmischung enthalten sein. Dieser mindestens eine weitere Industrieruß kann in Mengen von bis zu 20 phr, bevorzugt von bis zu 10 phr in der erfindungsgemäßen mit Schwefel vernetzbaren Gummierungsmischung enthalten sein.

### Kieselsäure

Die mit Schwefel vernetzbare Gummierungsmischung kann zur Verbesserung der Reißeigenschaften weiterhin Kieselsäuren als Füllstoffe enthalten, wobei die die Gesamtmenge an Kieselsäure bis zu 90 phr beträgt. Bevorzugt werden 0,1 bis 70 phr, besonders bevorzugt 2 bis 30 phr wenigstens einer Kieselsäure eingesetzt. Diese Kieselsäure wird zu diesem Zweck und daher im Rahmen der vorliegenden Schrift bevorzugt ohne Silan-Kupplungsagenzien, das heißt als so genannter inaktiver Füllstoff, eingesetzt.

Der Industrieruß LS kann in der mit Schwefel vernetzbaren Gummierungsmischung zusammen mit mindestens einem weiteren Industrieruß und/oder Kieselsäure enthalten sein.

Sind Kieselsäuren in der mit Schwefel vernetzbare Gummierungsmischung enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 120 bis 250 m²/g, aufweist. Als Kieselsäuren können sowohl konventionelle Kieselsäure wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

### Weitere Füllstoffe

Ferner können in geringen Mengen, von bis zu 10 phr, bevorzugt von 0,1 bis 10 phr, weitere Füllstoffe wie Alumosilicate, Kreide, Stärke, Magnesiumoxid, Titandioxid oder Kautschukgele in der mit Schwefel vernetzbaren Gummierungsmischung enthalten sein.

Weiterhin ist es denkbar, dass die mit Schwefel vernetzbare Gummierungsmischung Kohlenstoffnanoröhrchen (carbon nanotubes (CNT) inklusive diskreter CNTs, sogenannten hollow carbon fibers (HCF) und modifizierter CNT enthaltend eine oder mehrere funktionelle Gruppen, wie Hydroxy-, Carboxy und Carbonyl-Gruppen) enthält.

Auch Graphit und Graphene sowie sogenannte "carbon-silica dual-phase filler" sind als Füllstoff denkbar.

Bevorzugt ist die mit Schwefel vernetzbare Gummierungsmischung jedoch frei von diesen weiteren Füllstoffen, das heißt sie enthält bevorzugt weniger als 0,001 phr dieser weiteren Füllstoffe.

### C Aktivatoren

Die mit Schwefel vernetzbare Gummierungsmischung kann Aktivatoren aufweisen, wie beispielsweise Zinkoxid und Fettsäuren (z. B. Stearinsäure). Zinkoxid wird daher im Rahmen der vorliegenden Schrift nicht als Füllstoff betrachtet. Zinkoxid fungiert in mit Schwefel vernetzbaren Gummierungsmischungen vorrangig als Aktivator zur Initiierung der Vernetzung der Polymerketten des Kautschuks. Gemeinsam mit Stearinsäure wird der chemische Prozess der Vernetzung in Gang gesetzt.

Die Menge an Zinkoxid in einer mit Schwefel vernetzbaren Gummierungsmischung beträgt zwischen 1 und 15 phr, bevorzugt zwischen 3 und 13 phr, besonders bevorzugt zwischen 6 und 10 phr. Die Menge an Fettsäure, insbesondere Stearinsäure in einer mit Schwefel vernetzbaren Gummierungsmischung beträgt zwischen 1 und 15 phr, bevorzugt zwischen 3 und 13 phr, besonders bevorzugt zwischen 6 und 10 phr.

Während des chemisch physikalischen Prozesses der Vulkanisation geht das Zinkoxid chemische Verbindungen ein. So reagiert es beispielsweise zu Zinkstearat. Darüber hinaus sind die Stoffe in die Elastomermatrix eingebunden.

### D Agenzien

Auch kann die mit Schwefel vernetzbare Gummierungsmischung weitere Agenzien für die Anbindung von Füllstoffen, insbesondere Industrieruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Industrieruß als Füllstoff sehr gute physikalische Eigenschaften der mit Schwefel vernetzbaren Gummierungsmischung ergeben.

Agenzien können der mit Schwefel vernetzbaren Gummierungsmischung in einer Menge von bis zu 15 phr zugesetzt sein.

### Kupplungsagenzien

Zur Verbesserung der Verarbeitbarkeit und zur Anbindung der Kieselsäure und anderer gegebenenfalls vorhandener polarer Füllstoffe an den Dienkautschuk können Silan-Kupplungsagenzien in mit Schwefel vernetzbare Gummierungsmischung eingesetzt werden. Hierbei können ein oder mehrere verschiedene Silan-Kupplungsagenzien in Kombination miteinander eingesetzt werden. Die mit Schwefel vernetzbare Gummierungsmischung kann somit ein Gemisch verschiedener Silane enthalten. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in mit Schwefel vernetzbare Gummierungsmischung bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann.

Silan-Kupplungsagenzien können der mit Schwefel vernetzbaren Gummierungsmischung in einer Menge von bis zu 15 phr zugesetzt sein. Bevorzugt sind der mit Schwefel vernetzbaren Gummierungsmischung keine Silan-Kupplungsagenzien zugesetzt.

### E Prozesshilfsmittel / Zusatzstoffe

Des Weiteren kann die mit Schwefel vernetzbare Gummierungsmischung übliche Prozesshilfsmittel bzw. Zusatzstoffe in üblichen Massenanteilen enthalten. Zu diesen Zusatzstoffen zählen beispielsweise Alterungsschutzmittel, Weichmacher, Wachse, Harze, Mastikationshilfsmittel, Verarbeitungshilfsmittel und dergleichen.

Prozesshilfsmittel bzw. Zusatzstoffe können der mit Schwefel vernetzbaren Gummierungsmischung in einer Menge von bis zu 70 phr zugesetzt sein.

### Alterungsschutzmittel

Als Alterungsschutzmittel können beispielsweise N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ) und andere Substanzen eingesetzt werden.

Alterungsschutzmittel können der mit Schwefel vernetzbaren Gummierungsmischung in einer Menge von 2 bis 8 phr zugesetzt sein.

### Weichmacher

Es können in der mit Schwefel vernetzbaren Gummierungsmischung noch bis zu 70 phr, bevorzugt 0,1 bis 60 phr, zumindest eines Weichmachers vorhanden sein. Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle bevorzugt mit einem Massenanteil an polyzyklischen Aromaten von weniger als 3 % gemäß Methode IP 346 (BTL; wie sie in der DE 10 2008 037 714 A1 offenbart sind) oder Öle auf Basis nachwachsender Rohstoffe (wie z. B. Rapsöl, Terpenöle (z. B. Orangenöle) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004) zwischen 500 und 20000 g/mol liegt. Werden in der mit Schwefel vernetzbaren Gummierungsmischung Flüssig-Polymere als Weichmacher eingesetzt, so gehen diese nicht als Kautschuk in die Berechnung der Zusammensetzung der Polymermatrix (phr- Berechnung) ein.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

### Wachse

Der mit Schwefel vernetzbaren Gummierungsmischung können Wachse als Prozesshilfsmittel beigemengt werden.

### Harze

Auch kann die mit Schwefel vernetzbare Gummierungsmischung Harze, insbesondere Klebharze, die keine Weichmacherharze sind, enthalten.

### Mastikationshilfsmittel

Mastikationshilfsmittel, wie beispielsweise 2,2'-Dibenzamidodiphenyldisulfid (DBD) können der mit Schwefel vernetzbaren Gummierungsmischung zugesetzt sein.

### Verarbeitungshilfsmittel

Verarbeitungshilfsmittel, wie beispielsweise Fettsäuresalze, Zinkseifen, und/oder Fettsäureester und deren Derivate, wie beispielsweise PEG-Carbonsäureester können in der mit Schwefel vernetzbaren Gummierungsmischung enthalten sein.

### F Vulkanisationsregulatoren

Des Weiteren kann die mit Schwefel vernetzbare Gummierungsmischung vulkanisationsbeeinflussende Substanzen in der Form von Vulkaninsationsregulatoren wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern.

Vulkanisationsregulatoren können der mit Schwefel vernetzbaren Gummierungsmischung in einer Menge von 0,1 bis 15 phr zugesetzt sein.

Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können. DCBS ist ein Vulkanisationsbeschleuniger auf Basis 2-Benzothiazyl-N,N-di-cyclohexyl-sulfenamid und gehört zur Gruppe der Sulfenamide.

Vulkanisationsbeschleuniger können der mit Schwefel vernetzbaren Gummierungsmischung in einer Menge von 0,1 bis 2 phr zugesetzt sein.

### G Schwefel und/oder Schwefelspender

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr, Schwefel bevorzugt in Mengen von 0,4 bis 4 phr) der mit Schwefel vernetzbaren Gummierungsmischung zugesetzt. Die Vulkanisation kann auch in Anwesenheit von sehr geringen Schwefelmengen in Kombination mit schwefelspendenden Substanzen erfolgen.

### H Haftsystem

Die mit Schwefel vernetzbare Gummierungsmischung enthält ein Haftsystem. Je nachdem, ob die mit Schwefel vernetzbare Gummierungsmischung für textile oder metallische Festigkeitsträger eingesetzt werden soll, kommt entweder ein Haftsystem für die Gummi-Textil-Haftung oder ein Haftsystem für die Gummi-Metall-Haftung zur Anwendung.

Wird die mit Schwefel vernetzbare Gummierungsmischung zur Gummierung von metallischen Festigkeitsträgern, insbesondere Stahlcord, eingesetzt, wird vorzugsweise ein Stahlcordhaftsystem auf der Basis von organischen Cobaltsalzen und Verstärkerharzen und mehr als 2,5 phr Schwefel verwendet.

### Organisches Cobaltsalz

Die organischen Cobaltsalze werden üblicherweise in Mengen von 0,1 bis 3 phr, bevorzugt in Mengen von 0,2 bis 2 phr eingesetzt. Als Cobaltsalze können z. B. Cobaltstearat, -borat, -borat-alkanoate, -naphthenat, -rhodinat, -octoat, -adipat usw. verwendet werden.

### Harz aus Resorcin und Formaldehydspender

Die Haftung von Gummi zu textilen Festigkeitsträgern erfolgt über Imprägnierung (z. B. mit Resorcinformaldehydharzen in Kombination mit Kautschuklatices, RFL-Dip), im Direktverfahren mit Haftmischungen oder über Haftlösungen aus unvulkanisiertem Kautschuk mit Polyisocyanaten.

Harze aus Resorcin und Formaldehydspender können der mit Schwefel vernetzbaren Gummierungsmischung in einer Menge von 0,1 bis 6 phr zugesetzt sein.

### Verstärkerharz

Die Gummi-Metall-Haftung kann durch Zusatz von so genannten Verstärkerharzen in der mit Schwefel vernetzbare Gummierungsmischung positiv beeinflusst werden. Als Verstärkerharze sind beispielsweise Lignin, Phenol-Formaldehydharze mit Härter und Polymerharze bekannt.

Verstärkerharze können der mit Schwefel vernetzbaren Gummierungsmischung in einer Menge von bis zu 6 phr zugesetzt sein.

Zur Verbesserung der Gummi-Metall-Haftung bei der Verwendung Metall-basierter Festigkeitsträger können Cobaltsalze und/oder ein Resorcin-Formaldehydsystem als Zusätze für die mit Schwefel vernetzbare Gummierungsmischung verwendet werden. Zur Verbesserung der Gummi-Textil-Haftung bei der Verwendung Textil-basierter Festigkeitsträger kann ein Resorcin-Formaldehyd-Kieselsäuresystem als Zusatz für die mit Schwefel vernetzbare Gummierungsmischung verwendet werden.

Als Verstärkerharze können Resorcin-Formaldehyd-Harze, beispielsweise Resorcin-Hexamethoxymethylmelamin-Harze (HMMM) oder Resorcin-Hexamethylentetramin-Harze (HEXA), oder modifizierte Phenolharze, beispielsweise Alnovol®-Typen, eingesetzt werden. Von den Resorcin-Harzen können auch die Vorkondensate eingesetzt werden.

### Fahrzeugreifen

Fahrzeugreifen sind mit textilen oder metallischen Festigkeitsträgern, beispielsweise mit vermessingtem Stahlcord, verstärkt, um hohen mechanischen Beanspruchungen standzuhalten. Fahrzeugreifen weisen beispielsweise vermessingten Stahlcord im Gürtel, im Wulstkern und gegebenenfalls in der Karkasse auf. Um die Haltbarkeit des Gummi-Festigkeitsträger-Verbundes zu gewährleisten, soll die einbettende erfindungsgemäße mit Schwefel vernetzbare Gummierungsmischung eine gute Haftung zum Festigkeitsträger aufzeigen, wobei die Haftung durch Alterung und feuchte Lagerung nicht beeinträchtigt werden soll. Die Vulkanisate sollten außerdem eine hohe dynamische und mechanische Beständigkeit und eine geringe Neigung zu Rissbildung und -wachstum aufweisen.

Bekannt ist aus Messungen und Simulationen, dass bei Fahrzeugreifen (nachfolgend auch als Reifen bezeichnet), insbesondere bei Reifen von Lastkraftwagen (LKW-Reifen), im Bereich der Gürtelkanten sehr hohe thermische und mechanische Belastungen während des Einsatzes auftreten. Diese thermischen und mechanischen Belastungen wirken sich negativ auf die Haltbarkeit der Reifenbauteile in diesem Bereich aus.

Der Einsatz der Finite Elemente Methode (FEM), eine Simulationsmethode, zeigt zudem, dass sich im Hinblick auf die Belastungen im Gürtelbereich eine Steifigkeitszunahme der Gürtelgummierung positiv auf die Reifenhaltbarkeit auswirkt. Ein möglichst geringer Wärmeaufbau der Mischungen wirkt sich ebenfalls positiv auf die Reifenhaltbarkeit aus.

Gemäß einer Ausgestaltung der Erfindung handelt es sich bei den Festigkeitsträgern um metallische Festigkeitsträger. Die Verbesserung der Haftung und des Rissverhaltens wirkt sich besonders vorteilhaft bei metallischen Festigkeitsträgern aus, da diese bei Haftungsverlust und Rissbildung verstärkt der Korrosion ausgesetzt sind, was die Lebensdauer der Fahrzeugreifens stark beeinträchtigt.

Die mit Schwefel vernetzbare Gummierungsmischung kann zur Gummierung unterschiedlichster Reifenbauteile, wie dem Wulstkern, den Wulstabdeckungen, dem Gürtel, der Karkasse oder den Gürtelbandagen, eingesetzt werden, wobei auch mehrere Bauteile innerhalb eines Reifens mit der erfindungsgemäßen Mischung versehen, das heißt in der Regel kalandriert, werden können.

Eine besonders hohe Verlängerung der Lebensdauer von Fahrzeugreifen kann erzielt werden, wenn die in der Regel metallischen Gürtellagen mit der erfindungsgemäßen mit Schwefel vernetzbaren Gummierungsmischung versehen werden. Ein Reifen, der einen Gürtel mit der erfindungsgemäßen Mischung als Gürtelgummierung aufweist und der nach herkömmlichen Verfahren aufgebaut und vulkanisiert wird, zeichnet sich durch eine sehr gute Gürtelhaltbarkeit aus.

Alternativ oder parallel dazu kann die Karkasse mit der mit Schwefel vernetzbaren Gummierungsmischung versehen werden. Vorzugsweise handelt sich dabei um die Stahlcord-Karkasse eines Nutzfahrzeugreifens.

Die erfindungsgemäße mit Schwefel vernetzbare Gummierungsmischung eignet sich beispielsweise zur Verwendung zur Herstellung der inneren Bauteile eines Fahrzeugreifens, insbesondere Fahrzeugluftreifens, wie Gürtelkantenstreifen oder Laufstreifenunterplatte sowie gummierte Festigkeitsträger, beispielsweise ausgeführt als Spulbandagen, Gürteleinlagen, Karkasse, Kernprofil, Stahlkern und Wulstverstärker.

Bevorzugt handelt es sich bei dem Fahrzeugreifen um einen Fahrzeugluftreifen.

Die Finite Elemente Methode (FEM) ist ein Verfahren um das Verhalten auch komplexer Bauteile durch Computerberechnungen abzuschätzen. Sind die richtigen Randbedingungen einer Konstruktion (Geometrie, Material, sowie die Lasten) bekannt, so kann mit FEM-Berechnungen das Verhalten eines Bauteils vorhergesagt werden ohne den zeitintensiven und teuren Bau von Prototypen sowie der zugehörigen Tests, jedoch kann die chemische Zusammensetzungen von Mischungen bzw. Zubereitungen nicht durch FEM ermittelt werden, lediglich die für die Reaktion eines Bauteils gewünschten Eigenschaften, beispielsweise für einen Fahrzeugreifen können abgeschätzt werden.

Die Shore-A-Härte (Kugeldruckhärte) ist der Widerstand gegen das Eindringen eines kugelförmigen Körpers und wird gemäß DIN 53 505/ISO 2039 ermittelt. Gemessen wird sie als das Verhältnis aus der Eindrückkraft und der beim Eindrücken entstehenden Oberfläche. Nach DIN 53 505 wird die Prüfung mit einer gehärteten und polierten Stahlkugel mit 5 mm Durchmesser durchgeführt.

Die Bestimmung der Rückprallelastizität nach DIN 53 512 dient zur Beurteilung des Elastizitätsverhaltens von Gummi bei einer Stoßbeanspruchung. Ein definierter Pendelhammer (Hammerfinne) schlägt auf einen Gummi-Prüfkörper auf. Die Rückprallelastizität wird aufgrund der Auslenkung des Hammers berechnet.

Beim Zugversuch gemäß DIN 53 504 werden genormte Gummi-Prüfkörper in eine Zugprüfmaschine eingespannt und mit konstanter Vorschubgeschwindigkeit bis zum Zerreißen gedehnt. Bei dieser Prüfung wird der Verlauf der benötigten Kraft und der Dehnung aufgezeichnet und daraus ein Zugdehnungsdiagramm erstellt. Wichtige Einzelkennwerte sind die Reißfestigkeit und -dehnung.

Die Erfindung soll nun anhand von Vergleichs- und Ausführungsbeispielen, die in der Tabelle 3 zusammengefasst sind, näher erläutert werden.

Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die mit Schwefel vernetzbaren Vergleichsgummierungsmischungen sind mit V, die erfindungsgemäße mit Schwefel vernetzbare Gummierungsmischung ist mit E gekennzeichnet. Die Mischungen V(1) und V(2) sind mit Schwefel vernetzbare Gummierungsmischungen die herkömmliche Industrieruße enthalten. Die Mischung V(1) enthält einen Industrieruß des Typs N 339 und die Mischung V(2) enthält einen Industrieruß des Typs N 326. Die Mischung E enthält demgegenüber einen Industrieruß CD2056 der Firma Birla Carbon, welcher der Spezifikation des Industrierußes LS entspricht. Die Kenndaten der Industrierußtypen sind in der nachfolgenden Tabelle 2 zusammengefasst.

**Tabelle 2**

| **Industrie -ruß** | **enthalten in Mischung** | **Jodadsorptionszahl [mg/g]** | **OAN [ml/100g]** | **C-OAN [ml/100g]** | **NSA [m²/g]** | **STSA [m²/g]** |
|---|---|---|---|---|---|---|
| N 339 | V(1) | 90 | 120 | 99 | 91 | 86 |
| N 326 | V(2) | 82 | 72 | 68 | 78 | 76 |
| LS (CD2056) | E | 92 | 135 | 112 | 89 | 87 |

Die Herstellung der mit Schwefel vernetzbaren Gummierungsmischung erfolgte unter üblichen Bedingungen in mehreren Stufen in einem Labortangentialmischer. Aus sämtlichen Gummierungsmischungen wurden Prüfkörper durch 20 minütige Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur und 70 °C gemäß DIN 53 505/ISO 2039
- Rückprallelastizität bei Raumtemperatur und 70 °C gemäß DIN 53 512,
- Zugfestigkeit bei Raumtemperatur gemäß DIN 53 504
- Reißdehnung bei Raumtemperatur gemäß DIN 53 504
- Spannungswert (Modul) bei 50 % Dehnung (M50), bei 100 % Dehnung (M100) und bei 200 % Dehnung (M200) bei Raumtemperatur gemäß DIN 53 504

**Tabelle 3**

| **Bestandteile** | **Einheit** | **V(1)** | **V(2)** | **E** |
|---|---|---|---|---|
| Naturkautschuk | phr | 100 | 100 | 100 |
| Industrieruß N 339 | phr | 57 | - | - |
| Industrieruß N 326 | phr | - | 60 | - |
| Industrieruß LS (CD2056) | phr | - | - | 57 |
| Kieselsäure | phr | 4 | 4 | 4 |
| Prozesshilfsmittel | phr | 7,7 | 7,7 | 12,2 |
| Alterungsschutzmittel | phr | 3,8 | 3,8 | 4,5 |
| organisches Cobaltsalz | phr | 1,0 | 1,0 | 0,65 |
| Harz aus Resorcin und | | | | |
| Formaldehydspender | phr | 4,3 | 4,3 | 3,3 |
| Zinkoxid | phr | 8 | 8 | 8 |
| Beschleuniger | phr | 0,8 | 0,8 | 1,1 |
| Schwefel | phr | 4,4 | 4,4 | 5,4 |

| **Eigenschaften** | | mit N 339 | mit N 326 | mit CD 2056 |
|---|---|---|---|---|
| Shore A-Härte bei RT | Shore A | 78 | 74 | 75 |
| Shore A-Härte bei 70 °C | Shore A | 74 | 70 | 72 |
| Rückprallelastizität bei RT | % | 39 | 40 | 40 |
| Rückprallelastizität bei 70°C | % | 51 | 54 | 55 |
| Zugfestigkeit bei RT | MPa | 15 | 21 | 16 |
| Reißdehnung bei RT | % | 276 | 425 | 283 |
| Spannungswert 50 % | MPa | 2,4 | 1,9 | 2,4 |
| Spannungswert 100 % | MPa | 4,6 | 3,6 | 4,8 |
| Spannungswert 200 % | MPa | 11,4 | 8,9 | 11,8 |

Die Rückprallelastizität ermittelt bei 70 °C ist ein Indikator für den Rollwiderstand des aus der jeweiligen Gummierungsmischung gefertigten Fahrzeugluftreifens. Ein höherer Wert weist auf einen geringeren Rollwiderstand des aus dieser Gummierungsmischung gefertigten Fahrzeugluftreifens hin. Mit 55 % stellt sich die Gummierungsmischung E als sehr vorteilhaft dar. Der Rollwiderstand ist ein Maß für den Energieverlust durch einen Fahrzeugluftreifen im Fahrbetrieb.

Der Spannungswert stellt ein Maß für die Steifigkeit des jeweils aus der mit Schwefel vernetzten Gummierungsmischung gefertigten Fahrzeugluftreifens dar. Auch hier zeigen sich überraschend deutliche Vorteile für die mit Schwefel vernetzten Gummierungsmischung E. Alle drei mit Schwefel vernetzten Gummierungsmischungen weisen eine vergleichbare Härte auf, sodass ein Vergleich der übrigen Kenndaten Rückschlüsse auf die spätere Verwendung der jeweiligen mit Schwefel vernetzten Gummierungsmischung im Fahrzeugluftreifen zulässt. Überraschend gut stellt sich die mit Schwefel vernetzte Gummierungsmischung E dar.

Unter Verwendung des Industrierußes LS in der erfindungsgemäßen mit Schwefel vernetzte Gummierungsmischung E wird eine Optimierung von Steifigkeit und Wärmeaufbau für Gummierungsmischungen im Gürtelkantenbereich ermöglicht, welche zu einer verbesserten Fahrzeugluftreifenhaltbarkeit im Vergleich zu mit Schwefel vernetzten Gummierungsmischungen welche die Industrierußtypen N326 und N339 aufweisen (Vergleichsmischungen V(1) und V(2)) führt.

Gegenüber der mit Schwefel vernetzten Vergleichsgummierungsmischung V(1) mit dem Industrieruß N339 weist die erfindungsgemäße mit Schwefel vernetzte Gummierungsmischung E eine höhere, und für diesen Einsatz bessere Rückprallelastizität bei 70 °C auf, dies führt zu einer Verminderung des Rollwiderstandes des aus der mit Schwefel vernetzten Gummierungsmischung E gefertigten Fahrzeugluftreifens.

Gegenüber der mit Schwefel vernetzten Vergleichsgummierungsmischung V(2) mit dem Industrieruß N326 weist die erfindungsgemäße mit Schwefel vernetzte Gummierungsmischung mit dem Industrieruß LS überraschend eine größere Steifigkeit auf.

Der Industrieruß LS, beispielsweise der Industrieruß CD2056 weist eine relative kleine Oberfläche mit 89 m²/g auf, jedoch eine hohe Struktur 135 ml/100g, im Hinblick auf die in den Vergleichsmischungen V(1) und V(2) eingesetzten Industrieruße N326 und N339. Die geringe Oberfläche ermöglicht einen geringen Wärmeaufbau (Rückprallelastizität bei 70 °C), die hohe Struktur eine große Verstärkung, sprich Steifigkeit in der mit Schwefel vernetzten Gummierungsmischung, beispielsweise M200. Der sich ergebene Zielkonflikt, wird mit dem Industrieruß LS überraschend auf einem deutlich höheren Niveau gelöst.

## Patentansprüche

1. Mit Schwefel vernetzbare Gummierungsmischung für Festigkeitsträger in Elastomer-Erzeugnissen, insbesondere in Fahrzeugreifen, enthaltend wenigstens einen Dienkautschuk, zumindest einen Industrieruß und ein Haftsystem, **dadurch gekennzeichnet, dass** ein Industrieruß LS eine spezifische Oberfläche NSA gemäß ASTM D6556-04 zwischen 85 bis 95 m²/g und
eine Struktur, abgeleitet aus der Ölabsorptionszahl OAN gemäß ASTM D2414, zwischen 125 und 145 ml/100 g und eine Struktur nach der Komprimierung der Industrierußprobe LS, abgeleitet aus der Ölabsorptionszahl COAN gemäß ASTM D3493 zwischen 105 und 117 ml/100 g aufweist.

2. Mit Schwefel vernetzbare Gummierungsmischung nach Patentanspruch 1, **dadurch gekennzeichnet, dass** der Industrieruß LS eine spezifische Oberfläche NSA gemäß ASTM D6556-04 zwischen 87,5 und 92,5 m²/g aufweist.

3. Mit Schwefel vernetzbare Gummierungsmischung nach Patentanspruch 1, **dadurch gekennzeichnet, dass** der Industrieruß LS eine Struktur, abgeleitet aus der Ölabsorptionszahl OAN gemäß ASTM D2414, zwischen 130 ml/100 g und 140 ml/100 g aufweist.

4. Mit Schwefel vernetzbare Gummierungsmischung nach mindestens einem der vorhergehenden Patentansprüchen, **dadurch gekennzeichnet, dass** der Industrieruß LS eine Jodadsorptionszahl gemäß ASTM D1510 von ≥ 92 ± 0,36 mg/g, eine Ölabsorptionszahl OAN gemäß ASTM D2414 von ≥ 135 ± 0,35 ml/100g, eine Ölabsorptionszahl der komprimierten Industrierußprobe LS C-OAN gemäß ASTM D3493 von ≥ 112 ± 0,53 ml/100 g, eine spezifische Oberfläche NSA gemäß ASTM D6556 von ≤ 89 ± 0,69 m²/g und eine spezifische, für Kautschuk zugängliche Oberfläche STSA gemäß ASTM D6556 von ≥ 87 ± 0,69 m²/g aufweist.

5. Mit Schwefel vernetzbare Gummierungsmischung nach zumindest einem der vorhergehenden Patentansprüche, **dadurch gekennzeichnet, dass** sie zumindest 20 bis 90 phr des Industrierußes LS enthält.

6. Mit Schwefel vernetzbare Gummierungsmischung nach einem der vorhergegangenen Patentansprüche, **dadurch gekennzeichnet, dass** sie mindestens 70 phr Naturkautschuk enthält.

7. Mit Schwefel vernetzbare Gummierungsmischung nach zumindest einem der vorhergehenden Patentansprüche, **dadurch gekennzeichnet, dass** sie 0,1 bis 90 phr, wenigstens einer Kieselsäure enthält.

8. Mit Schwefel vernetzbare Gummierungsmischung nach zumindest einem der vorhergehenden Patentansprüche, **dadurch gekennzeichnet, dass** mindestens ein Festigkeitsträger in die mit Schwefel vernetzbare Gummierungsmischung eingebettet ist, insbesondere ein metallischer Festigkeitsträger.

9. Mit Schwefel vernetzbare Gummierungsmischung nach mindestens einem der vorhergehenden Patentansprüche, **dadurch gekennzeichnet, dass** das Haftsystem ein Stahlcordhaftsystem auf der Basis von organischen Cobaltsalzen und Verstärkerharzen und mehr als 2,5 phr Schwefel ist.

10. Verwendung einer mit Schwefel vernetzbaren Gummierungsmischung nach einem der vorhergehenden Patentansprüche, **dadurch gekennzeichnet, dass** sie zur Herstellung der inneren Bauteile eines Fahrzeugreifens, insbesondere Fahrzeugluftreifens, wie Gürtelkantenstreifen oder Laufstreifenunterplatte sowie gummierte Festigkeitsträger, beispielsweise ausgeführt als Spulbandagen, Gürteleinlagen, Karkasse, Kernprofil, Stahlkern und Wulstverstärker dient.

11. Fahrzeugreifen, insbesondere Fahrzeugluftreifen, der eine mit Schwefel vernetzte Gummierungsmischung nach zumindest einem der Patentansprüche 1 bis 9 aufweist.

12. Fahrzeugreifen nach Patentanspruch 11, **dadurch gekennzeichnet, dass** er eine Gürtelgummierung aus der mit Schwefel vernetzbaren Gummierungsmischung nach zumindest einem der Patentansprüche 1 bis 9 aufweist.

13. Fahrzeugreifen, insbesondere Nutzfahrzeugreifen, nach einem der Patentansprüche 11 oder 12, **dadurch gekennzeichnet, dass** er eine Karkassgummierung aus der mit Schwefel vernetzbaren Gummierungsmischung gemäß mindestens einem der Patentansprüche 1 bis 9 aufweist.

## Claims

1. Sulfur-crosslinkable rubberization mixture for strength members in elastomer products, in particular in vehicle tyres, containing at least one diene rubber, at least one industrial carbon black and an adhesive system, **characterized in that** an industrial carbon black LS has a specific surface area NSA according to ASTM D6556-04 of between 85 to 95 m²/g and
a structure derived from the oil absorption number OAN according to ASTM D2414 of between 125 and 145 ml/100 g and a structure after compression of the industrial carbon black sample LS derived from the oil absorption number COAN according to ASTM D3493 of between 105 and 117 ml/100 g.

2. Sulfur-crosslinkable rubberization mixture according to Claim 1, **characterized in that** the industrial carbon black LS has a specific surface area NSA according to ASTM D6556-04 of between 87.5 and 92.5 m²/g.

3. Sulfur-crosslinkable rubberization mixture according to Claim 1, **characterized in that** the industrial carbon black LS has a structure derived from the oil absorption number OAN according to ASTM D2414 of between 130 ml/100 g and 140 ml/100 g.

4. Sulfur-crosslinkable rubberization mixture according to at least one of the preceding claims, **characterized in that** the industrial carbon black LS has an iodine adsorption number according to ASTM D1510 of ≥ 92 ± 0.36 mg/g, an oil absorption number OAN according to ASTM D2414 of ≥ 135 ± 0.35 ml/100g, an oil absorption number of the compressed industrial carbon black sample LS C-OAN according to ASTM D3493 of ≥ 112 ± 0.53 ml/100 g, a specific surface area NSA according to ASTM D6556 of ≤ 89 ± 0.69 m²/g and a specific rubber-accessible surface area STSA according to ASTM D6556 of ≥ 87 ± 0.69 m²/g.

5. Sulfur-crosslinkable rubberization mixture according to at least one of the preceding claims, **characterized in that** it contains at least 20 to 90 phr of the industrial carbon black LS.

6. Sulfur-crosslinkable rubberization mixture according to one of the preceding claims, **characterized in that** it contains at least 70 phr of natural rubber.

7. Sulfur-crosslinkable rubberization mixture according to at least one of the preceding claims, **characterized in that** it contains 0.1 to 90 phr of at least one silica.

8. Sulfur-crosslinkable rubberization mixture according to at least one of the preceding claims, **characterized in that** at least one strength member is embedded in the sulfur-crosslinkable rubberization mixture, in particular a metallic strength member.

9. Sulfur-crosslinkable rubberization mixture according to at least one of the preceding claims, **characterized in that** the adhesive system is a steel cord adhesive system based on organic cobalt salts and reinforcer resins and more than 2.5 phr of sulfur.

10. Use of a sulfur-crosslinkable rubberization mixture according to any of the preceding claims, **characterized in that** it is used for producing the inner components of a vehicle tyre, in particular pneumatic vehicle tyre, such as belt edge strips or tread underplate and also rubberized strength members, for example in the form of wound bandages, belt inlays, carcass, core profile, steel core and bead reinforcers.

11. Vehicle tyre, in particular pneumatic vehicle tyre, which comprises a sulfur-crosslinked rubberization mixture according to at least one of Claims 1 to 9.

12. Vehicle tyre according to Claim 11, **characterized in that** it comprises a belt rubberization composed of the sulfur-crosslinkable rubberization mixture according to at least one of Claims 1 to 9.

13. Vehicle tyre, in particular commercial vehicle tyre, according to either of Claims 11 and 12, **characterized in that** it comprises a carcass rubberization composed of the sulfur-crosslinkable rubberization mixture according to at least one of Claims 1 to 9.

## Revendications

1. Mélange d'engommage réticulable au soufre pour renforts dans des produits élastomères, notamment dans des pneus de véhicules, contenant au moins un caoutchouc diénique, au moins un noir de carbone industriel et un système adhésif, **caractérisé en ce qu'**un noir de carbone industriel LS présente une surface spécifique NSA selon ASTM D6556-04 comprise entre 85 et 95 m²/g, et
une structure, dérivée de l'indice d'absorption d'huile OAN selon ASTM D2414, comprise entre 125 et 145 ml/100 g, et une structure après la compression de l'échantillon de noir de carbone industriel LS, dérivée de l'indice d'absorption d'huile COAN selon ASTM D3493, comprise entre 105 et 117 ml/100 g.

2. Mélange d'engommage réticulable au soufre selon la revendication 1, **caractérisé en ce que** le noir de carbone industriel LS présente une surface spécifique NSA selon ASTM D6556-04 comprise entre 87,5 et 92,5 m²/g.

3. Mélange d'engommage réticulable au soufre selon la revendication 1, **caractérisé en ce que** le noir de carbone industriel LS présente une structure, dérivée de l'indice d'absorption d'huile OAN selon ASTM D2414, comprise entre 130 ml/100 g et 140 ml/100 g.

4. Mélange d'engommage réticulable au soufre selon au moins l'une quelconque des revendications précédentes, **caractérisé en ce que** le noir de carbone industriel LS présente un indice d'adsorption d'iode selon ASTM D1510 ≥ 92 ± 0,36 mg/g, un indice d'absorption d'huile OAN selon ASTM D2414 ≥ 135 ± 0,35 ml/100 g, un indice d'absorption d'huile de l'échantillon de noir de carbone industriel comprimé LS C-OAN selon ASTM D3493 ≥ 112 ± 0,53 ml/100 g, une surface spécifique NSA selon ASTM D6556 ≤ 89 ± 0,69 m²/g et une surface spécifique accessible pour le caoutchouc STSA selon ASTM D6556 ≥ 87 ± 0,69 m²/g.

5. Mélange d'engommage réticulable au soufre selon au moins l'une quelconque des revendications précédentes, **caractérisé en ce qu'**il contient au moins 20 à 90 pce du noir de carbone industriel LS.

6. Mélange d'engommage réticulable au soufre selon l'une quelconque des revendications précédentes, **caractérisé en ce qu'**il contient au moins 70 pce de caoutchouc naturel.

7. Mélange d'engommage réticulable au soufre selon au moins l'une quelconque des revendications précédentes, **caractérisé en ce qu'**il contient 0,1 à 90 pce d'au moins une silice.

8. Mélange d'engommage réticulable au soufre selon au moins l'une quelconque des revendications précédentes, **caractérisé en ce qu'**au moins un renfort est incorporé dans le mélange d'engommage réticulable au soufre, notamment un renfort métallique.

9. Mélange d'engommage réticulable au soufre selon au moins l'une quelconque des revendications précédentes, **caractérisé en ce que** le système adhésif est un système adhésif pour câbles en acier à base de sels de cobalt organique et de résines renforçantes et plus de 2,5 pce de soufre.

10. Utilisation d'un mélange d'engommage réticulable au soufre selon l'une quelconque des revendications précédentes, **caractérisé en ce qu'**il sert à la fabrication des composants intérieurs d'un pneu de véhicule, notamment d'un bandage pneumatique de véhicule, tel qu'une bande de bord de ceinture ou une sous-plaque de bande de roulement, ainsi que de renforts engommés, par exemple configurés sous la forme de bandages bobinés, d'inserts de ceinture, d'une carcasse, d'un profilé de noyau, d'un noyau en acier et d'un renfort de talon.

11. Pneu de véhicule, notamment bandage pneumatique de véhicule, qui comprend un mélange d'engommage réticulé au soufre selon au moins l'une quelconque des revendications 1 à 9.

12. Pneu de véhicule selon la revendication 11, **caractérisé en ce qu'**il comprend un engommage de ceinture en le mélange d'engommage réticulable au soufre selon au moins l'une quelconque des revendications 1 à 9.

13. Pneu de véhicule, notamment pneu de véhicule utilitaire, selon l'une quelconque des revendications 11 ou 12, **caractérisé en ce qu'**il comprend un engommage de carcasse en le mélange d'engommage réticulable au soufre selon au moins l'une quelconque des revendications 1 à 9.
